# EUROPEAN PATENT SPECIFICATION

(11) **EP 1 701 782 B1**
(45) Date of publication and mention of the grant of the patent: **24.08.2011**
(21) Application number: 05705030.4
(22) Date of filing: 06.01.2005
(51) Int. Cl.: B01J 4/00

(54) **FLUID ADDITIVE DELIVERY SYSTEMS**
FLUIDADDITIVZUFUHRSYSTEME
SYSTEMES DE DELIVRANCE D'ADDITIF LIQUIDE

(30) Priority: 09.01.2004 US 754270
(43) Date of publication of application: 20.09.2006
(73) Proprietor: The Lubrizol Corporation, Wickliffe, Ohio 44092-2298 (US)
(72) Inventor: GARVIN, Gary, Mentor, Ohio 44060 (US); BURRINGTON, James D., Gates Mills, Ohio 44040 (US)
(74) Representative: von Kreisler Selting Werner
(86) International application number: PCT/US2005/000218
(87) International publication number: WO 2005/070528

(56) References cited:
- EP-A- 0 254 776
- EP-A- 1 061 251
- WO-A-2004/007653
- US-A- 5 552 040
- US-A1- 2002 014 447
- US-A1- 2003 053 927

## Description

### FIELD OF THE INVENTION

The present invention relates to fluid additive delivery apparatus for allowing a fluid such as oil to come into contact with a fluid additive gel to cause one or more additive components in the gel to be slowly released into the fluid.

### BACKGROUND OF THE INVENTION

Specially formulated slow-release fluid additives that provide for the slow release of additives into a fluid such as oil to meet certain performance requirements of the fluid are generally known. In some, the additives are incorporated into thermoplastic polymers which slowly dissolve into the fluid. In others, the additives are incorporated into polymers which are oil-permeable at elevated temperatures. In still others, the additives are incorporated into particles which are fluid-insoluble but fluid-wettable. In still others, fluid soluble solid polymers are provided, with or without additional additives being incorporated into the polymers.

Although these slow-release fluid additives are capable of introducing additives in the fluid being conditioned, it has been discovered that fluid additive gels can be used more effectively to provide for the slow release of additives into a fluid such as lubricant additives into an oil. In particular, it has been found that fluid-soluble additive gels slowly dissolve to their component fluid additive parts when contacted by the fluid. Examples of such fluid additive gels are disclosed in U.S. Patent Applications Serial No. 10/196,441, filed July 16, 2002, Serial No. 10/603,644, filed June 25, 2003, Serial No. 10/603,894, filed June 25, 2003 and Serial No. 10/603,517, filed June 25, 2003.

US-A-2003/053927 discloses compositions and methods for releasing oxygen scavengers into a coolant including the placement of a device containing its compositions into a coolant filter.

US-A-2002/014447 describes an oil conditioning filter with a mechanically active filter element and an a chemically active filter element, wherein the chemically active filter element has a plurality of particles disposed within the oil filter housing.

EP-A-1061251 discloses a fuel filter for use in internal combustion engines containing a fuel additive that can be released into fuel.

The fuel filter comprises a housing assembly defining filter chamber and an inner housing positioned in said filter chamber, wherein said inner housing defines an inner chamber. The source of a fuel additive is disposed within said inner chamber.

EP-A-0254776 discloses a filter comprising an incorporated reservoir for reserve additives.

US-A-5,552,040 discloses a filter with a quantity of liquid additive that is used to increase the service life of an oil with which the filter is used.

WO-A-2004/007653 describes a gel form of lubricant additives that will slowly release into fluids over time and also discloses its use in oil filters.

There is a need for fluid additive delivery systems that allow for the desired contact of the fluid with these fluid additive gels to cause one or more components of the additives in the gels to be slowly released into the fluid.

### SUMMARY OF THE INVENTION

The present invention is for fluid additive delivery apparatus that allow contact of a fluid being conditioned with any desired form of a fluid additive gel to cause one or more components of the additives in the gel to be slowly released into the fluid. In particular, the present invention provides the following:
1. A fluid additive delivery apparatus comprising 1) a fluid additive gel, 2) a container for the gel, 3) housing for receiving the container; wherein the container having one or more openings to allow contact of the fluid with the gel to cause one or more additive components in the gel to be released into the fluid; and wherein the number, size and location of the openings in the container is selected to control the surface area of the gel contacted by the fluid to tailor the release rate of the gel into the fluid to suit a particular application, and 4) a means for mounting the housing between a fluid filter and a fluid filter mounting surface of a device, the housing containing flow passages for directing the fluid from the device past the container and through the filter back to the device, wherein the container is removably mounted inside the housing.
2. The apparatus of item 1, wherein the container has an open end for exposing the gel inside the container to the fluid entering the housing from the device; and/or has a closed end to prevent contact of the fluid entering the housing from the device with the gel at the closed end, and one or more of the openings are in a side or end wall of the container adjacent the closed end.
3. The apparatus of item 1 wherein the container is a cartridge that is mounted inside a canister type housing that has inlet and outlet passages adjacent opposite ends for permitting fluid to flow through the housing and around the cartridge.
4. The apparatus of item 1 wherein a plurality of containers for the gel are mounted inside a canister type housing that has inlet and outlet passages adjacent opposite ends for permitting fluid to flow through the housing and around the containers.
5. The apparatus of item 4 wherein the containers are stacked one on top of another inside the housing and have one or more of the openings in a side wall of the containers for allowing contact of the fluid with the gel inside the containers and wherein at least one end of the containers is open and the containers are mounted in spaced relation from one another inside the housing to allow fluid to contact the gel at the open ends of the containers.
6. The apparatus of item 1 wherein the container comprises an insert that is mounted inside a fluid filter to allow contact of the gel with the fluid passing through the filter.
7. The apparatus of item 1 wherein the container is associated with a cap or plug that is used to close off an opening to a reservoir containing the fluid.
8. The apparatus of item 1 wherein the container comprises a compression spring having a plurality of turns surrounding the fluid additive gel, with spaces between the turns when the spring is expanded for exposing the gel to the fluid between the turns.

The fluid additive delivery system of the present invention can be used to condition the fluid in any lubricated mechanical systems including but not limited to those in internal combustion engines, natural gas engines, stationary engines, metal working coolant systems, industrial lubricated systems, oil or fuel filters, hydraulic systems and transmission systems and the like.

### BRIEF DESCRIPTION OF THE DRAWINGS

The present invention may be more readily understood by reference to the following drawings in which:
Figure 1 is an exploded schematic longitudinal section through one form of fluid additive delivery apparatus of the present invention including a container for the fluid additive gel fitted inside a housing which may be removably attached to the base plate of a fluid filter;
Figures 2 and 3 are schematic longitudinal sections through other forms of containers for the fluid additive gel fitted inside a housing which may be removably attached to a fluid filter similar to the housing shown in Figure 1;
Figure 4 is a top plan view of the fluid additive gel container and housing of Figure 3;
Figure 5 is a schematic longitudinal section through another fluid additive delivery apparatus of the present invention including a housing containing the fluid additive gel which has a longitudinal recess at one end for at least partially receiving a fluid filter when attached thereto for use in situations where because of space constraints, the combined length of the housing and fluid filter must be shorter;
Figures 6-8 are schematic longitudinal sections through other fluid additive delivery apparatus of the present invention including different forms of containers for the fluid additive gel mounted inside a canister housing having inlet and outlet passages for the flow of fluid through the canister;
Figure 9 is a schematic longitudinal section through another fluid additive delivery apparatus of the present invention including an insert type container for the fluid additive gel shown placed within the fluid flow passage of a fluid filter downstream of the filter element;
Figures 10-18 are schematic perspective views of different fluid additive gel container inserts of the present invention;
Figure 19A is a schematic perspective view of fluid additive delivery apparatus of the present invention including a container or holder for the fluid additive gel incorporated in a filler cap used to close off the fill opening of a reservoir containing the fluid;
Figure 19B is a side elevation thereof;
Figures 20 and 21 are perspective views of other fluid additive gel containers of the present invention;
Figure 22 is a schematic perspective view of another fluid additive delivery apparatus of the present invention including a bag-like container for the fluid additive gel connected to a drain plug used to close off a drain opening of a reservoir containing the fluid; and
Figure 23 is a schematic perspective view of another fluid additive delivery apparatus of the present invention including a gel container permanently mounted inside a reservoir for the fluid.

### DETAILED DESCRIPTION

The fluid additive delivery apparatus of the present invention provide for the desired contact of a fluid being conditioned with a fluid additive gel to cause one or more components of the additives in the gel to be slowly released into the fluid as described hereafter. The fluid additive delivery apparatus of the present invention can be used to condition the fluid in any lubricated mechanical systems including but not limited to those in internal combustion engines, natural gas engines, stationary engines, metal working coolant systems, industrial lubricated systems, oil or fuel filters, hydraulic systems and transmission systems and the like. Examples of fluid additive gels that may be delivered using the fluid additive delivery apparatus of the present invention are disclosed in U.S. Patent Applications No. 10/196,441, filed July 16,2002, Serial No. 10/603,644, filed June 25, 2003, Serial No. 10/603,894, filed June 25, 2003 and Serial No. 10/603,517, filed June 25, 2003.

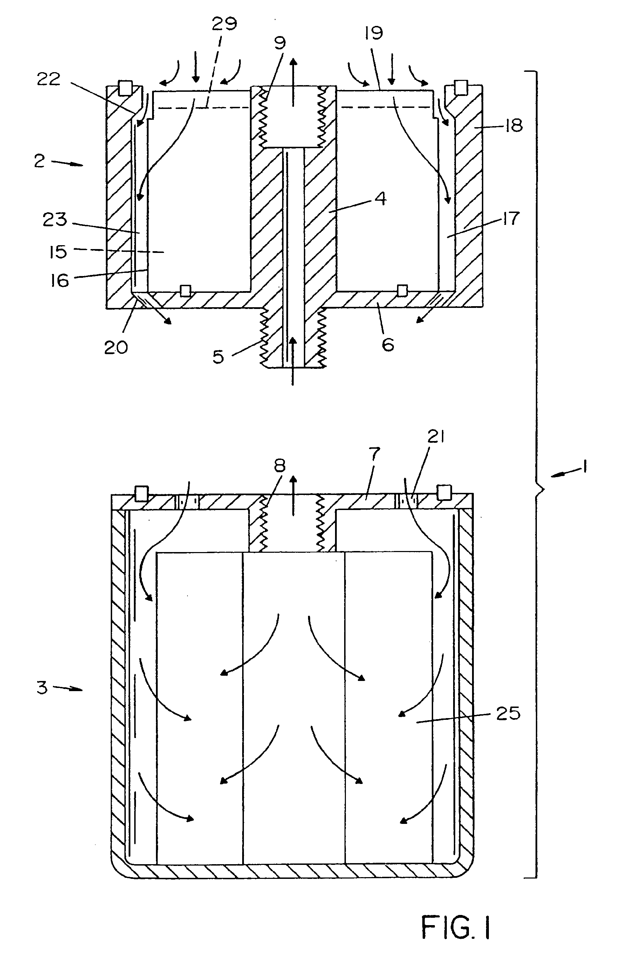

Referring now in detail to the drawings, wherein the same reference numbers are used to designate like parts, and initially to Figure 1, there is shown one form of fluid additive delivery apparatus 1 in accordance with the present invention including an intermediate adaptor housing 2 which is mountable between a fluid filter mounting surface of an engine block or other device (not shown) and a fluid filter 3 such as an oil filter. Adaptor housing 2 includes an inner hollow tube 4 for fluid flow that may be externally threaded at one end 5 for sealed attachment of an end wall 6 of the adaptor housing with the base plate 7 of fluid filter 3 by spinning the externally threaded end 5 of the hollow tube into a threaded opening 8 in the filter base plate. The other end 9 of hollow tube 4 may be internally threaded for sealed attachment of adaptor housing 2 to a mounting surface by spinning the internally threaded end 9 onto an externally threaded hollow tubular fitting on the mounting surface (not shown).

A container 16 containing any desired form of the fluid additive gel 15 may be placed in the void space 17 of adaptor housing 2 between inner hollow tube 4 and the outer side wall 18 of the adaptor housing as schematically shown in Figure 1 before attaching the adaptor housing to the mounting surface of the device and attaching the fluid filter to the adaptor housing. Fluid from the device will flow in the direction of the arrows past the gel container 16, which may have one or more openings therein such as open end 19, and out through a plurality of outlet openings 20 in the adaptor housing end wall 6 and into the fluid filter through a plurality of inlet openings 21 arranged in a circular pattern in the filter base plate. The inner surface of side wall 18 of adaptor housing 2 may have an undercut 22 to create a flow path 23 for the fluid around the gel container 16. Also the outlet openings 20 in end wall 6 of the adaptor housing may be inwardly angled as shown in Figure to match up with the inlet openings 21 in filter base plate 7 when fluid filter 3 is attached to adaptor housing 2.

The fluid entering fluid filter 3 will pass through filter element 25 which may be fabricated of any suitable filtering medium and then back out through the threaded outlet opening 8 in filter base plate 7 and through inner hollow tube 4 in adaptor housing 2 for return to the engine block or other device. The direct flow of fluid across the gel at the open end 19 of the gel container 16 as shown in Figure 1 will result in the relatively fast dissolution of the fluid additive components into the fluid.

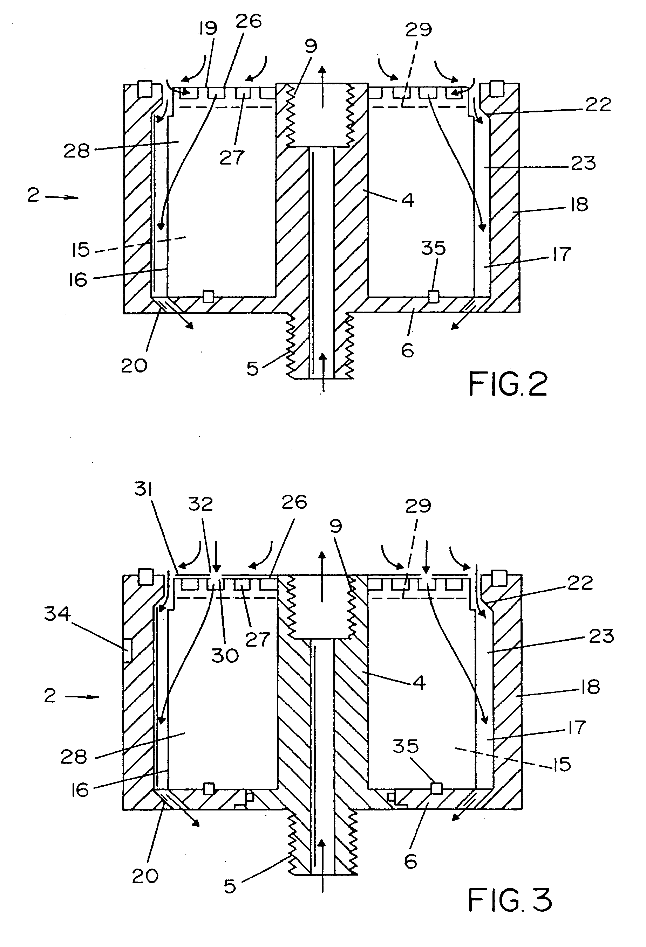

If desired, the end 19 of gel container 16 may be closed off by an end cap or cover plate 26, and one or more slots or openings 27 may be provided in the side wall 28 of the container above the gel level 29 in the container 16 as shown in Figure 2. This provides for indirect flow of the fluid past the gel in the container by allowing some of the fluid to enter the container through the openings 27 and dissolve selected components of the additives in the gel which slowly diffuse out through the openings and are then carried off by the fluid flow in the flow path 23 around the container.

One or more openings 30 may also be provided in the container cover 26 to provide for increased flow of fluid into and out of the container as shown in Figure 3. The number, size and location of the openings 30 in cover 26 and openings 27 in the container side wall 28 will determine the rate of flow of the fluid past the gel inside the container and thus the rate of dissolution of the components of the additives into the fluid.

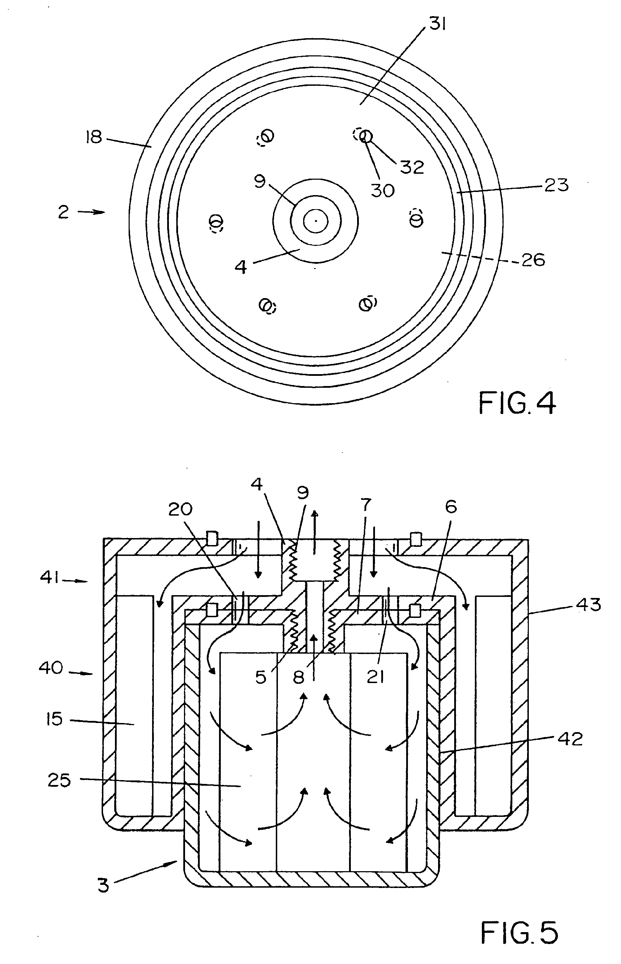

This flow rate may be varied as by attaching a diverter plate 31 having one or more openings 32 therein to the outlet end 9 of the inner tube 4 in overlying relation to the gel container cover plate 26. The inner tube 4 and adaptor housing 2 including outer side wall 18 and end wall 6 may be of a two-piece construction as shown in Figure 3 to permit indexing of the adaptor housing relative to the inner tube and thus the diverter plate 31 carried thereby. Also gel container 16 may be pinned to the housing at 35 as further shown in Figure 3. Accordingly, controlled indexing of the adaptor housing 2 relative to the inner tube 4 will cause a change in the amount of overlap of one or more holes 32 in diverter plate 31 with one or more openings 30 in the gel container cover plate 26 as schematically shown in Figure 4 to direct fluid flow in varying proportions through and around the container to vary the rate of dissolution of the components of the additives into the fluid. A rate indicator 34 of any suitable type may be provided in the outer wall 18 of adaptor housing 2 to provide a visual indication of the rate of dissolution of the additives into the fluid as by detecting the indexed position of the adaptor housing 2 relative to the inner tube 4 and thus the amount of overlap between the holes 32 in diverter plate 31 and the holes 30 in the gel container cover plate 26.

Figure 5 shows another fluid additive delivery apparatus 40 of the present invention including an intermediate adaptor housing 41 for the fluid additive gel 15 that is adapted to be mounted between a fluid filter 3 and a mounting surface of an engine block or other device similar to the adaptor housing 2 of Figures 1-4. However, the adaptor housing 41 shown in Figure 5 is made wider than the filter 3 and includes a longitudinal recess 42 at one end and outer side wall 43. Recess 42 at least partially receives the filter when attached to the externally threaded end 5 of the housing inner tube 4 for use in situations where because of space constraints, a longer combined length of the adaptor housing and filter is prohibitive but an increase in circumferential size of the adaptor housing is not.

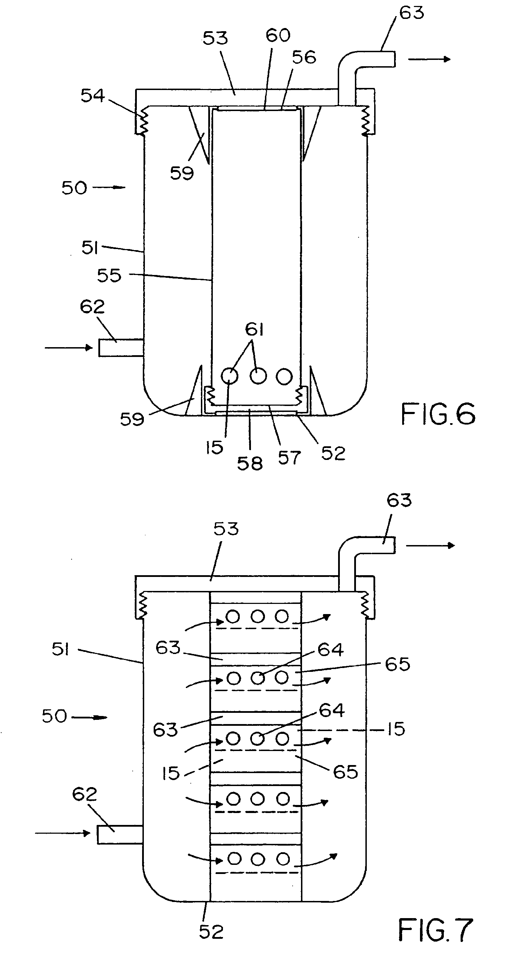

One or more containers containing any desired form of fluid additive gel may also be placed in a canister-like housing that may be used to add one or more components of the fluid additive gel to the fluid at different locations in a system. Figures 6-8 show a fluid additive apparatus 50 of the present invention including a canister-like housing 51 that is closed at one end 52 and has a removable lid 53 at the other end 54 which when removed permits one or more gel filled containers to be mounted inside the canister. Figure 6 shows a cartridge-like container 55 which may be open at one end 56 for filling with a matrix of desired components which make up the gel 15. The other end 57 of container 55 may be closed and have a lid 58 or the like threaded thereon to aid in locating the other end between suitable guides 59 on the closed end of the canister. Similar guides 59 may be provided on the canister lid 53 for locating the open end of the container within the canister when the canister lid is secured in place. A suitable compression seal 60 or the like may be provided between the lid 53 and open end of the container for sealing off the open end inside the canister.

One or more openings 61 may be provided in the container for contact of the gel 15 by the fluid as it flows into and out of the canister through inlet and outlet passages 62 and 63 on opposite sides adjacent opposite ends thereof. The size, number and location of the openings 61 in container 55 will determine the amount of surface area of the fluid additive gel contacted by the fluid passing through the canister and thus the rate of dissolution of one or more components of the additive gel into the fluid. A metering valve (not shown) may be provided for controlling the amount of fluid flow through the canister.

Figure 7 shows a plurality of shorter cylindrical shaped containers 65 stacked one on top of another inside canister 51. For indirect flow of the fluid past the gel, the open ends of the containers may be closed as by lids 63, and one or more holes 64 may be provided in the sides of the containers above (or below) the level of the gel 15 inside the containers as schematically shown in Figure 7 to allow some of the fluid to enter the containers through the holes for dissolving one or more components of the gel which slowly diffuse into the fluid flowing around the containers.

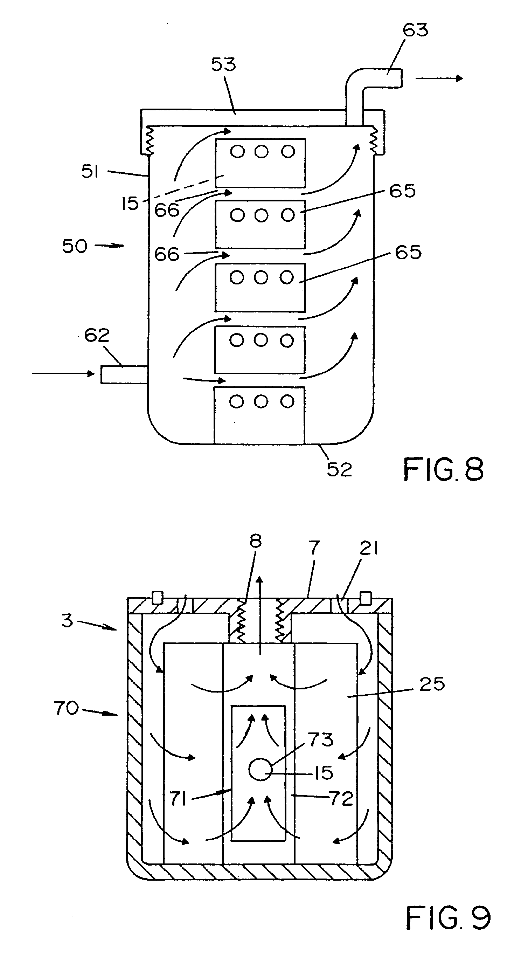

For direct flow of the fluid past the gel 15 for faster delivery of one or more additive components of the gel to the fluid, one or both ends of the containers 65 may be left open and open spaces 66 provided between the containers to allow the fluid to flow across the gel in the containers as schematically shown in Figure 8.

Figure 9 shows another fluid additive delivery apparatus 70 of the present invention including an insert type container 71 for the fluid additive gel 15 which may be placed directly within the return fluid flow path in the open center 72 of a fluid filter 3 downstream of the filter element 25 as schematically shown in Figure 9. Insert 71 may have one or more openings 73 at the ends and/or along the sides to provide sufficient surface area of the additive gel for contact by the fluid to obtain a desired release rate of the components of the additives into the fluid.

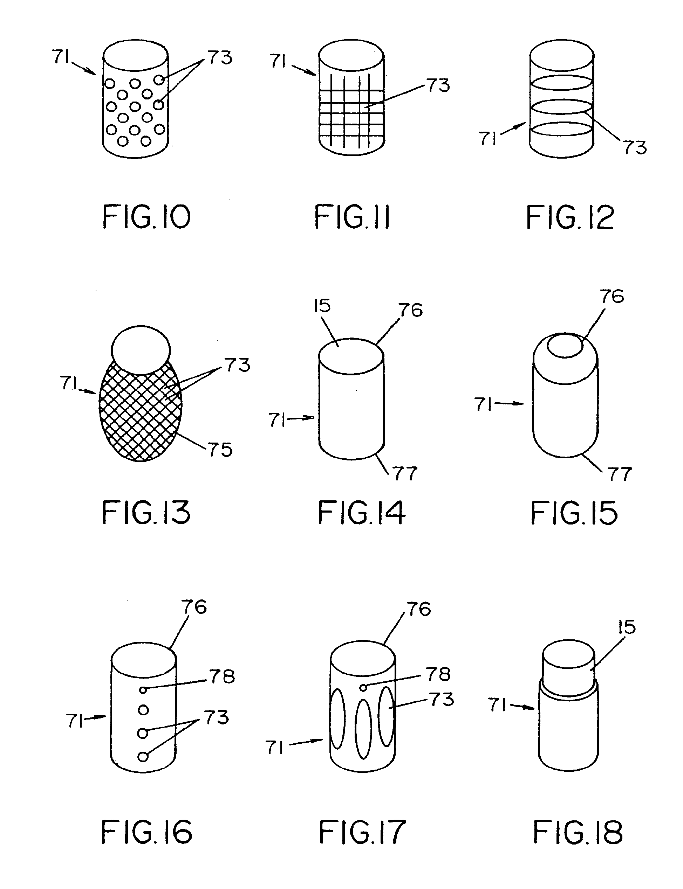

The openings 73 may be incorporated into the insert 71, for example, by the use of perforated rigid materials such as plastic, by use of a mesh or screen, or by the introduction of holes or slots as by drilling or machining either before or after the additive material is introduced into the inserts. Figure 10 shows an insert 71 with multiple drilled holes 73; Figure 11 shows the holes 73 formed by perforating an insert 71 made out of a rigid material; Figure 12 shows holes 73 formed by slits in the sides of an insert; and Figure 13 shows holes 73 formed by making the insert out of a mesh or screen 75. Figures 14 and 15 show inserts 71 that may be open at one or both ends 76 and 77. Also, the open end or ends may be fluted as shown in Figure 15 to help prevent the gel from sliding out of the insert.

Figure 16 shows a plurality of axially spaced holes 73 that may also be provided in the side of the insert 71. Figure 17 shows axially extending, circumferentially spaced slots 73 that may be provided in the side of the insert 71. Moreover, one or more smaller weep holes 78 may be provided in the sides of the inserts 71 adjacent an open end 76 thereof to allow for some flow of fluid through the inserts when the gel 15 at the open end erodes below the level of the weep holes. Further, a portion of the additive gel 15 may be exposed to the fluid by removing a portion of the length of the insert 71 as schematically shown in Figure 18 after the additive material has gelled inside the insert.

If additive is introduced into the inserts after the holes are formed in the inserts, a blocking film (not shown) may be used to prevent the flow of additive out of the inserts until the additive material is gelled. This film can be removed after gelling but before use of the inserts, or if the film is made of a material which will dissolve in the fluid, the film may be left on the inside or outside of the inserts.

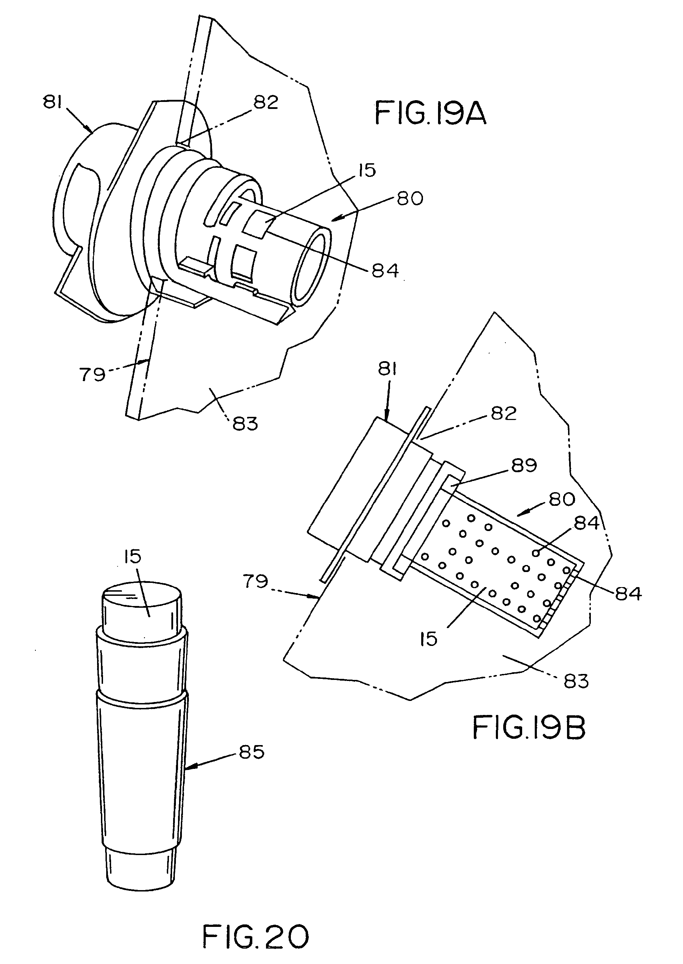

Figure 19A and Figure 19B shows another fluid additive delivery apparatus 79 of the present invention including a cartridge type insert 80 containing any desired form of fluid additive gel 15 inserted into a filler cap 81 used to close off the fill opening 82 of a reservoir 83 containing the fluid to be conditioned. Filler cap 81 may have a closable access opening in the outer end thereof through which the gel containing insert 80 may be inserted and retained in place by a flange 89 on the inner end of the insert. The length of the insert exposed to the fluid may vary as may the size, number and placement of the holes 84 in the side and/or end walls of the insert for varying the surface area of the gel exposed to the fluid in the reservoir. Filler cap 81 may be designed to accept a new cartridge insert 80 whenever the gel needs to be replenished. Alternatively, the cartridge insert 80 may be refilled by unplugging the access opening and injecting additional fluid additive gel into the insert using an injector type gel container 85 such as shown in Figure 20. Further, if desired an injector type gel container 85 may be used to inject gel 15 directly into the reservoir 83 through the fill hole 82 after the filler cap 81 has been removed therefrom. The gel will slowly dissolve in the fluid over time, replenishing the additives in the fluid.

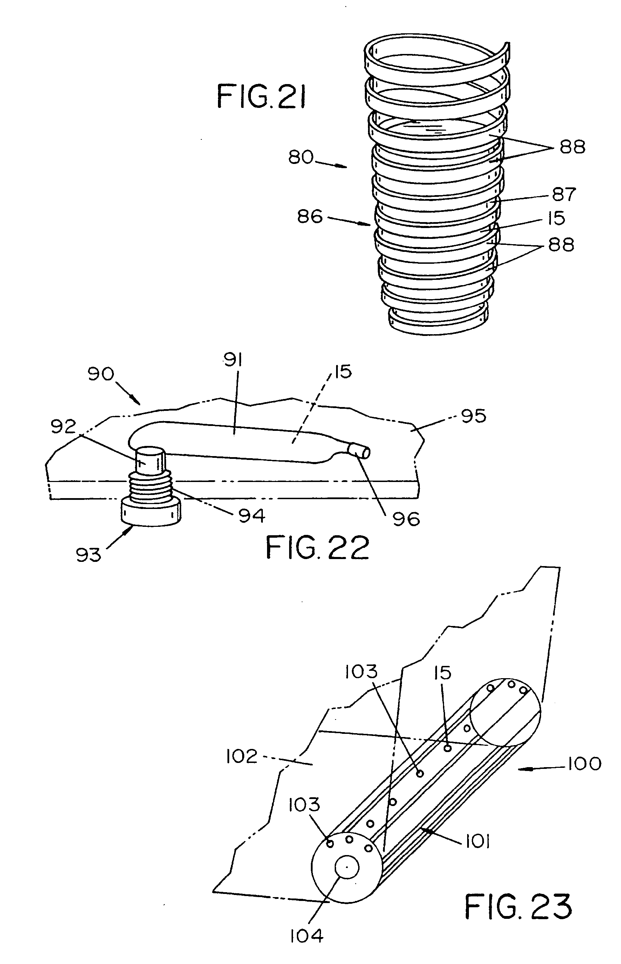

Cartridge insert 80 may have openings or holes similar to the openings or holes in the inserts shown in Figures 10-18. Alternatively the cartridge insert 80 may be in the form of a compression spring 86 such as shown in Figure 21 which when compressed will provide a substantially closed compartment inside the spring that can be filled with additive material and kept compressed until the additive material is gelled. After gelling, the spring 86 can be allowed to expand, which creates spaces 87 between the spring turns 88 for exposing the gel 15 inside the spring to the fluid inside the reservoir when inserted into the reservoir fill opening and held in place by the filler cap 81.

Figure 22 shows another fluid additive delivery apparatus 90 of the present invention including a bag-like container 91 for the fluid additive gel 15 that may be attached to a hollow inner tubular portion 92 of a drain plug 93 used to close off a drain opening 94 of a reservoir 95 containing the fluid to be conditioned. The bag-like container 91 may be made of a filter cloth type material to allow the fluid to contact the gel inside the bag. To install the bag in the reservoir, the bag may initially be rolled up inside the hollow tubular portion 92 of the drain plug. After the drain plug has been inserted into the drain opening 94, the bag may be filled by injecting the gel 15 into the bag through a closable opening in the drain plug (not shown). A magnet 96 may be provided on the outer end of the bag to hold the bag in place against the bottom of the reservoir.

Figure 23 shows another fluid additive delivery apparatus 100 of the present invention including a box-like gel container 101 mounted inside a fluid reservoir 102 such as an oil sump (oil pan). One or more openings 103 may be provided in the side walls and/or end walls of the container for contact of the gel 15 inside the container by the fluid in the reservoir. The size, number and placement of the holes or openings 103 in the container may be varied as desired for varying the surface area of the gel exposed to the fluid in the reservoir. Also if desired, a refill port 104 may be provided in the container that may be accessible through a closable access opening (not shown) in the wall of the reservoir for replenishing the container with gel. Alternatively, the entire container inside the reservoir may be replaced with another container containing a fresh supply of gel.

## Claims

1. A fluid additive delivery apparatus comprising 1) a fluid additive gel, 2) a container for the gel, 3) housing for receiving the container; wherein the container having one or more openings to allow contact of the fluid with the gel to cause one or more additive components in the gel to be released into the fluid; and wherein the number, size and location of the openings in the container is selected to control the surface area of the gel contacted by the fluid to tailor the release rate of the gel into the fluid to suit a particular application, and 4) a means for mounting the housing between a fluid filter and a fluid filter mounting surface of a device, the housing containing flow passages for directing the fluid from the device past the container and through the filter back to the device, wherein the container is removably mounted inside the housing.

2. The apparatus of claim 1, wherein the container has an open end for exposing the gel inside the container to the fluid entering the housing from the device; and/or has a closed end to prevent contact of the fluid entering the housing from the device with the gel at the closed end, and one or more of the openings are in a side or end wall of the container adjacent the closed end.

3. The apparatus of claim 1 wherein the container is a cartridge that is mounted inside a canister type housing that has inlet and outlet passages adjacent opposite ends for permitting fluid to flow through the housing and around the cartridge.

4. The apparatus of claim 1 wherein a plurality of containers for the gel are mounted inside a canister type housing that has inlet and outlet passages adjacent opposite ends for permitting fluid to flow through the housing and around the containers.

5. The apparatus of claim 4 wherein the containers are stacked one on top of another inside the housing and have one or more of the openings in a side wall of the containers for allowing contact of the fluid with the gel inside the containers and wherein at least one end of the containers is open and the containers are mounted in spaced relation from one another inside the housing to allow fluid to contact the gel at the open ends of the containers.

6. The apparatus of claim 1 wherein the container comprises an insert that is mounted inside a fluid filter to allow contact of the gel with the fluid passing through the filter.

7. The apparatus of claim 1 wherein the container is associated with a cap or plug that is used to close off an opening to a reservoir containing the fluid.

8. The apparatus of claim 1 wherein the container comprises a compression spring having a plurality of turns surrounding the fluid additive gel, with spaces between the turns when the spring is expanded for exposing the gel to the fluid between the turns.

## Patentansprüche

1. Fluidadditiv-Abgabevorrichtung, umfassend: 1) ein Fluidadditiv-Gel; 2) einen Behälter für das Gel; 3) ein Gehäuse zum Aufnehmen des Behälters, wobei der Behälter eine oder mehrere Öffnungen aufweist, um einen Kontakt des Fluids mit dem Gel zu ermöglichen und dadurch **z**u bewirken, dass eine oder mehrere Additivkomponenten in dem Gel in das Fluid freigesetzt werden, und wobei die Zahl, Größe und Position der Öffnungen in dem Behälter so ausgewählt sind, dass die Oberfläche des Gels, die mit dem Fluid in Kontakt kommt, so gesteuert wird, dass die Freisetzungsgeschwindigkeit des Gels in das Fluid so eingestellt wird, dass sie zu einer bestimmten Anwendung passt; und 4) eine Einrichtung zum Montieren des Gehäuses zwischen einen Fluidfilter und eine Fluidfilter-Montagefläche eines Geräts, wobei das Gehäuse Kanäle enthält, um das Fluid aus dem Gerät am Behälter vorbei und durch den Filter zurück zum Gerät zu leiten, wobei der Behälter innerhalb des Gehäuses entnehmbar montiert ist.

2. Vorrichtung gemäß Anspruch 1, wobei der Behälter ein offenes Ende aufweist, um das Gel innerhalb des Behälters dem Fluid auszusetzen, das aus dem Gerät in das Gehäuse eintritt, und/oder ein geschlossenes Ende aufweist, um einen Kontakt des Fluids, das aus dem Gerät in das Gehäuse eintritt, mit dem Gel am geschlossenen Ende zu verhindern, und sich eine oder mehrere der Öffnungen in einer Seiten- oder Endwand des Behälters in der Nähe des geschlossenen Endes befinden.

3. Vorrichtung gemäß Anspruch 1, wobei der Behälter eine Kartusche ist, die innerhalb eines Gehäuses vom Kanistertyp montiert ist, das Einlass- und Auslassleitungen in der Nähe von entgegengesetzten Enden aufweist, um ein Strömen von Fluid durch das Gehäuse und um die Kartusche herum zu ermöglichen.

4. Vorrichtung gemäß Anspruch 1, wobei eine Vielzahl von Behältern für das Gel innerhalb eines Gehäuses vom Kanistertyp montiert sind, das Einlass-und Auslassleitungen in der Nähe von entgegengesetzten Enden aufweist, um ein Strömen von Fluid durch das Gehäuse und um die Behälter herum zu ermöglichen.

5. Vorrichtung gemäß Anspruch 4, wobei die Behälter innerhalb des Gehäuses übereinander gestapelt sind und eine oder mehrere der Öffnungen in einer Seitenwand der Behälter aufweisen, um einen Kontakt des Fluids mit dem Gel innerhalb der Behälter zu ermöglichen, und wobei wenigstens ein Ende der Behälter offen ist und die Behälter innerhalb des Gehäuses in einem Abstand voneinander montiert sind, um zu ermöglichen, dass Fluid an den offenen Enden der Behälter mit dem Gel in Kontakt kommt.

6. Vorrichtung gemäß Anspruch 1, wobei der Behälter einen Einsatz umfasst, der innerhalb eines Fluidfilters montiert ist, um einen Kontakt des Gels mit dem durch den Filter strömenden Fluid zu ermöglichen.

7. Vorrichtung gemäß Anspruch 1, wobei der Behälter mit einem Verschluss oder Stopfen einhergeht, der verwendet wird, um eine Öffnung zu einem Reservoir, das das Fluid enthält, zu schließen.

8. Vorrichtung gemäß Anspruch 1, wobei der Behälter eine Druckfeder umfasst, die eine Vielzahl von Windungen aufweist, die das Fluidadditiv-Gel umgeben, wobei Zwischenräume zwischen den Windungen vorhanden sind, um das Gel zwischen den Windungen dem Fluid auszusetzen, wenn die Feder gedehnt wird.

## Revendications

1. Appareil de délivrance d'additif de fluide comprenant 1) un gel d'additif de fluide, 2) un contenant pour le gel, 3) un logement pour recevoir le contenant ; dans lequel le contenant comporte une ou plusieurs ouvertures pour permettre un contact du fluide avec le gel afin de provoquer la libération dans le fluide d'un ou plusieurs composants d'additif dans le gel ; et dans lequel le nombre, la taille et l'emplacement des ouvertures dans le contenant sont sélectionnés pour régler la surface du gel en contact avec le fluide pour ajuster le taux de libération du gel dans le fluide afin de l'adapter à une application particulière, et 4) un moyen pour monter le logement entre un filtre de fluide et une surface de montage de filtre de fluide d'un dispositif, le logement comprenant des passages d'écoulement pour diriger le fluide depuis le dispositif au-delà du contenant et à travers le filtre de retour vers le dispositif, dans lequel le contenant est monté de façon amovible à l'intérieur du logement.

2. Appareil selon la revendication 1, dans lequel le contenant présente une extrémité ouverte pour exposer le gel à l'intérieur du contenant au fluide entrant dans le logement depuis le dispositif ; et/ou présente une extrémité fermée pour empêcher un contact du fluide entrant dans le logement depuis le dispositif avec le gel à l'extrémité fermée, et une ou plusieurs des ouvertures sont situées dans une paroi latérale ou d'extrémité du contenant adjacente à l'extrémité fermée.

3. Appareil selon la revendication 1, dans lequel le contenant est une cartouche qui est montée à l'intérieur d'un logement de type bidon qui comporte des passages d'admission et de refoulement adjacents à des extrémités opposées pour permettre au fluide de s'écouler à travers le logement et autour de la cartouche.

4. Appareil selon la revendication 1, dans lequel une pluralité de contenants pour le gel est montée à l'intérieur d'un logement de type bidon qui comporte des passages d'admission et de refoulement adjacents à des extrémités opposées pour permettre au fluide de s'écouler à travers le logement et autour des contenants.

5. Appareil selon la revendication 4, dans lequel les contenants sont empilés les uns sur les autres à l'intérieur du logement et présentent une ou plusieurs des ouvertures dans une paroi latérale des contenants pour permettre un contact du fluide avec le gel à l'intérieur des contenants et dans lequel au moins une extrémité des contenants est ouverte et les contenants sont montés en relation espacée les uns par rapport aux autres à l'intérieur du logement pour permettre un contact entre le fluide et le gel aux extrémités ouvertes des contenants.

6. Appareil selon la revendication 1, dans lequel le contenant comprend un insert qui est monté à l'intérieur d'un filtre de fluide pour permettre un contact entre le gel et le fluide traversant le filtre.

7. Appareil selon la revendication 1, dans lequel le contenant est associé à un capuchon ou à un bouchon utilisé pour fermer une ouverture vers un réservoir contenant le fluide.

8. Appareil selon la revendication 1, dans lequel le contenant comprend un ressort de compression présentant une pluralité de tours entourant le gel d'additif de fluide, avec des espaces entre les tours lorsque le ressort est en extension pour exposer le gel au fluide entre les tours.
